# EUROPEAN PATENT SPECIFICATION

(11) **EP 1 134 091 B1**
(45) Date of publication and mention of the grant of the patent: **28.01.2004**
(21) Application number: 00308623.8
(22) Date of filing: 29.09.2000
(51) Int. Cl.: B42D 15/00, B42D 15/10, B32B 3/24, B32B 29/00, B32B 27/36

(54) **Security laminate**
Sicherheitslaminat
Stratifié de sécurité

(30) Priority: 29.02.2000 US 515117
(43) Date of publication of application: 19.09.2001
(73) Proprietor: Sonoco Development, Inc., Hartsville, South Carolina 29550 (US)
(72) Inventor: MacArthur, Donald L., Pennellville, New York 13132 (US)
(74) Representative: Perkins, Sarah

(56) References cited:
- EP-A- 0 596 547
- EP-A- 0 628 408
- FR-A- 2 401 271
- GB-A- 2 316 359
- US-A- 5 895 074

## Description

The present invention relates to security measures for deterring counterfeiting of valuable documents.

For almost as long as there have been documents of inherent value there have been attempts to counterfeit those documents. Security measures added to documents to deter counterfeiting have met with varying levels of success. United States currency, for example, have incorporated various security measures over the years. Among these are special ink and paper formulations, engraved patterns that interfere with photographic reproduction, "hidden" details within the engraved image, watermarks and strips of imprinted film embedded within the currency paper.

Each time a new security measure is implemented, counterfeiters are usually not far behind in their ability to counter those measure. For example, counterfeiters may employ skilled technicians who are able to closely copy special inks and paper. Counterfeiters may also use sophisticated photographic reproduction equipment and techniques to reproduce the intricate engravings, look of the paper and colors of the currency with great accuracy. Security features for valuable documents that are more sophisticated than those currently used are needed to further deter counterfeiters.

EP-A-0628408 describes a security document having paper sheets laminated on either side of a substrate sheet. Indicia are disposed on the substrate sheet and are undetectable when viewed in reflected light but become apparent in transmitted light. The indicia preferably consist of inks printed on the substrate sheet but may also include metallised regions and perforations.

EP-A-0596547 describes an identification document consisting of a data sheet covered by two transparent covering sheets. Each covering sheet comprises a number of laminated thermosetting plastic sheets having a thermoplastic bonding layer disposed between every two sheets. One or more of the thermosetting sheets may be perforated in an arbitrary way such that the thermoplastic bonding material penetrates the perforations to create stronger bonding between the sheets.

GB-A-2316359 and US-A-5895074 describe documents having lines of weakness to create detachable or tear-off regions.

The present invention comprises a security laminate comprising a base layer and first and second outer layers. The outer layers are bonded to the base layer by an adhesive. The base layer has a first face, a second face and a plurality of flow-through holes that penetrate through the base layer. The flow-through holes are located adjacent one another such that they define at least one line of weakness in the base layer. The adhesive is located in the flow-through holes and substantially covers the first and second faces of the base layer with a substantially uniform thickness of adhesive. The outer layers each have an inner face and an outer face. The inner faces of the outer layers are bonded, respectively, to the adhesive on the faces of the base layer such that the outer layers cover the respective faces of the base layer.

Another aspect of the present invention is directed to a method of forming a security laminate. First, an adhesive, a base layer, and first and second outer layers are provided. A plurality of flow-through holes located adjacent one another are formed in the base layer such that they define at least one line of weakness. The base layer and the first outer layer are bonded together with a first layer of the adhesive. The second face of the base layer and the inner face of the second outer layer are bonded together with a second layer of the adhesive. A portion of the adhesive is directed to fill the flow-through holes and bond the two outer layers together directly, in addition to the bond to the respective sides of the base layer.

For the purpose of illustrating the invention, the drawings show a form of the invention which is presently preferred. However, it should be understood that this invention is not limited to the precise arrangements and instrumentalities shown in the drawings.
Figure 1 is an exploded view illustrating a security laminate according to the present invention.
Figure 2 is plan view of the security laminate shown in Figure 1.
Figure 3 is a sectional view of the security laminate as taken along line 3-3 of Figure 2.
Figure 4 is a plan view of an alternative embodiment of a security laminate according to the present invention.
Figure 5 is a sectional view of the alternative embodiment as taken along line 5-5 of Figure 4.

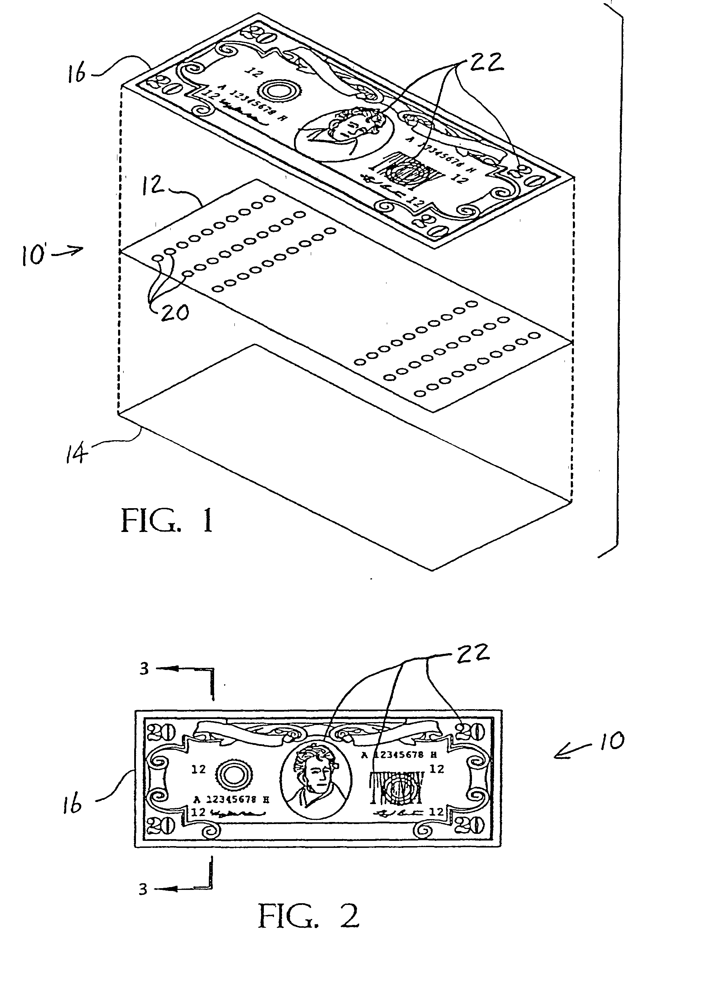

Referring to the drawings, wherein like numerals indicate like elements, Figure 1-3 illustrate a security laminate, which is generally indicated by the numeral 10. The security laminate 10 may be embodied in a piece of currency, such as the $20 United States Federal Reserve Note shown in Figures 1-3. However, the security laminate of the present invention is not limited to currency and may be incorporated into any valuable document such as bank notes, stock certificates, negotiable instruments and the like.

The security laminate 10 comprises a base layer 12 and first and second outer layers 14, 16 bonded to opposite faces of the base layer 10 with an adhesive 18. The base layer 12 includes a plurality of holes 20 therethrough that allow flow-through continuity of the adhesive 18 from one side of the base layer to the other. This continuity provides a direct bond of the outer layers 14,16 to one another. This type of bond is stronger than the bond between the outer layers 14, 16 and the base layer 12. The direct bond makes it more difficult for a counterfeiter to peel the outer layers 14, 16 from the laminate 10.

As an additional measure of security, the size, shape and arrangement of the flow-through holes 20 may be arranged as desired. The goal is that any attempt to remove one or both of the outer layers 14, 16 from the laminate 10 will result in the base layer 12 being torn between adjacent holes 20 as one of the outer layers is peeled. In the embodiment shown, the flow-through holes 20 are uniformly circular in shape and arranged in lines parallel to the peripheral edges of the laminate 10. However, the flow-through holes 20 may be other shapes such as ovals, squares, elongate slots, polygons or any other regular or non-regular shapes. Moreover, different shapes and different sizes of holes 20 may be used on the same base layer. Also, the arrangement of the flow-through holes 20 can be other than the symmetric pattern illustrated. As another measure of security and/or identification, the pattern, shapes and/or sizes of holes may be unique to each document or each series of documents, for example, a particular denomination of currency.

The base layer 12 may be made of any suitable material such as a plastic film and the like. In the preferred embodiment, the base layer 12 is a polyester film, most preferably polyethylene teraphthalate. The base layer 12 may include additional security measure known in the art, such as printed indicia, a watermark, a hologram or the like.

The outer layers 14, 16 are preferably made of a material that can stand up to wear. For example, in the $20 bill embodiment illustrated in Figures 1-3, the outer layers 14, 16 are preferably made of paper similar to that presently used for United States currency. In addition to being wear layers, the outer layers 14, 16 provide surfaces for receiving printed indicia. In the embodiment shown in Figures 1-3, this indicia comprises conventional $20 bill markings, which are illustrated generally and denoted by the numeral 22.

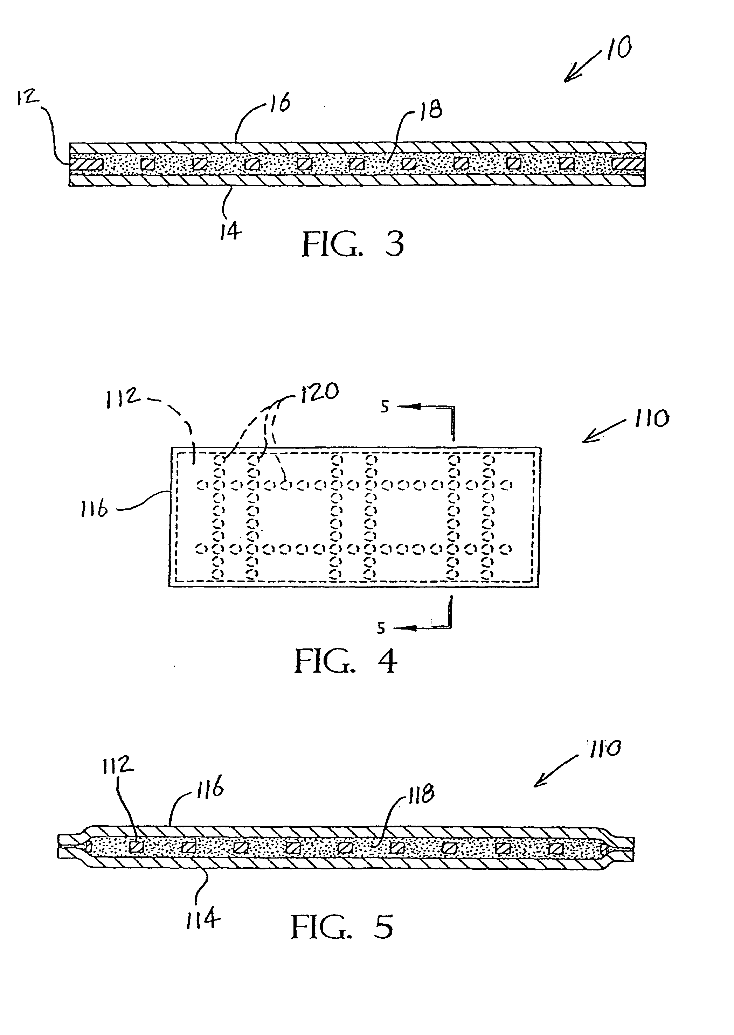

In the embodiment of Figures 1-3, the peripheral edges of the outer layers 14, 16 are in registry with the peripheral edges of the base layer 12. Alternatively, as shown in Figures 4 and 5, the peripheral edges of a base layer 112 of the laminate 110 may be located inward from the peripheral edges of outer layers 114, 116 such that the outer layers 114, 116 are bonded directly to one another around the perimeter of the laminate 110 by an adhesive 118. This configuration prevents the outer layers 114,116 from delaminating from the base layer 112 at the edges. The edges of the laminate 110 are typically vulnerable to delamination due to wear.

Since it is contemplated that the security laminate of the present invention may be incorporated into United States currency and other documents produced in large quantities, a manufacturing process that can meet a high volume demand is required. One such process comprises forming a continuous web of laminate onto which a plurality of documents are printed edge to edge across the width and along the length of the web. After printing, the web is cut into discrete documents at a cutting station.

In one embodiment, the laminate forming process includes a first outer layer supplying station, a first adhesive applying station, a base layer supplying station, a hole forming station, a second adhesive applying station and second outer layer supplying station. It is contemplated that each of the outer and base layers be supplied to the process from pre-rolled rolls of material. However, the layers may also be supplied as discrete sheets of materials taken from supply stacks of like material. One skilled in the art will understand the modifications necessary to the process and equipment to change the supplies from rolled material to sheet material. Therefore, only the process for rolled materials is described herein.

The web of the first outer layer is pulled from its supply roll past the first adhesive applying station, which applies a first layer of adhesive to one side of the first outer layer. After the first layer of adhesive has been applied, the base layer, which is unwound from its supply roll, is brought into contact with the first layer of adhesive and thereby joined to the first outer layer. As these joined layers are moved through the process, they are moved past the hole forming station wherein a hole forming means forms a plurality of flow-through holes in the base layer. Like patterns of holes are formed in the base layer in a rectangular array at a plurality of locations corresponding to the locations of the respective documents.

The hole forming means is preferably one or more precision laser drills. However, the hole forming means may be one or more mechanical drills or cutting apparatus, a corona discharge unit or the like.

After the holes have been formed, the laminate is moved past a second adhesive applying station where a second layer of adhesive is placed onto the exposed face of the base layer. Sufficient adhesive is applied to fill the flow-through holes and cover the base layer and holes with a substantially uniform thickness thereof. The laminate is then moved to the next station where the second outer layer is unwound from its supply roll and brought into contact with the second layer of adhesive. Depending on the type of adhesive used, the laminated may be moved to an adhesive curing station, a printing station, a rolling station where the laminate is rolled for further processing at a remote location or the like.

One skilled in the art will recognize that the above described process may be modified and yet remain within the scope of the invention. For example, the base layer supply station may precede the first outer layer supply station. Also, the first adhesive layer may be applied to the base layer, rather than the first outer layer. Similarly, the second adhesive layer may be applied to the second outer layer rather than the base layer. In addition, the process may include additional stations such as a curing station between the base layer supply station and the hole forming station.

In an alternative embodiment of the process, the hole forming station may immediately follow the base layer supplying station. Thus, the flow-through holes would be formed into the base layer before the base layer is bonded to the first outer layer. In this embodiment, the hole forming means may be any of those mentioned above or one or more hole punches or the like. In another embodiment, the hole forming means may be remote from the laminate forming process and the base layer supplied to the process from pre-rolled rolls of base layer material having pre-formed holes.

The above described manufacturing process is for a laminate having the peripheral edges of the outer and base layers in registry with one another, as show in Figures 1-3. One skilled in the art will recognize that the process may be modified for forming a laminate wherein the peripheral edges of the outer layers extend beyond the peripheral edges of the base layer, as shown in Figures 4 and 5. Instead of the base layer being supplied from a continuous roll of material, discrete sheets of base layer material corresponding to the individual base layers of the discrete documents are placed onto the first adhesive layer in successive rows across the width of the first outer layer so that adjacent edges of the sheets are spaced apart from one another. After the web is formed and printed, the documents are separated from one another along lines located approximately midway between the adjacent edges of the base layer sheets.

## Claims

1. A security laminate comprising:
a base layer (12) having a first face, a second face and a plurality of flow-through holes (20) penetrating through the base layer (12);
an adhesive (18) located in the flow-through holes and substantially covering the first and second faces of the base layer; and
first (14) and second (16) outer layers, each outer layer having an inner face and an outer face, the inner faces of the first and second outer layers bonded to, respectively, the first and second sides of the base layer and to one another by the adhesive within the flow-through holes (20),
**characterised in that** the plurality of flow-through holes (20) are located adjacent one another such that they define at least one line of weakness in the base layer (12).

2. The security laminate of claim 1 wherein the base layer (12) is made of a polyester film.

3. The security laminate of claim 2 wherein the polyester film is polyethylene teraphthalate.

4. The security laminate of claim 1 wherein the outer layers (14, 16) are made of paper.

5. The security laminate of claim 1 further comprising printed indicia on the outer face of at least one of the outer layers.

6. The security laminate of claim 5 wherein the laminate forms a bank note of a preselected denomination and the outer surfaces of both outer layers (14, 16) are printed with indicia that denote the denomination of the note.

7. The security laminate of claim 1 wherein the base layer (12) and the first and second outer layers (14, 16) each have an outer periphery, the outer peripheries of the first and second outer layers being substantially in registry with one another and located outward from the outer periphery of the base layer, the inner faces of the first and second outer layers being additionally bonded to one another between the outer periphery of the base layer and the outer peripheries of the outer layers.

8. A method of forming a security laminate comprising the steps of.
providing an adhesive (18); providing first (14) and second (16) outer layers, each outer layer having an inner face and an outer face;
providing a base layer (12) having a first and second faces;
forming a plurality of flow-through holes (20) in the base layer (12); bonding the inner face of the first outer layer (14) to the first face of the base layer (12); and
bonding with the adhesive (18) the inner face of the second outer (16) layer to the second face of the base layer (12) and to the inner face of the first outer layer (14) at the flow-through holes (20),
**characterised in that** the step of forming a plurality of flow-through holes (20) comprises forming a plurality of flow-through holes (20) located adjacent one another such that they define at least one line of weakness in the base layer.

9. The method of claim 8 wherein the flow-through holes (20) are formed after the first outer layer (14) has been bonded to the first face of the base layer (12).

10. The method of claim 9 wherein the flow-through holes (20) are formed by at least one laser drill.

11. A security laminate comprising:
a base layer (12) having a first face, a second face, a generally rectangular outer periphery and a plurality of flow-through holes (20) penetrating through the base layer, the flow-through holes (20) arranged in a plurality of preselected patterns;
an adhesive (18) located in the flow-through holes (20) and substantially covering the first and second faces of the base layer (12) with a substantially uniform thickness thereof; and
first (14) and second (16) outer layers, each outer layer having an inner face, an outer face and a generally rectangular outer periphery, the inner faces of the first and second outer layers (14, 16) bonded by the adhesive (18) to, respectively, the first and second sides of the base layer (12) and to one another at the flow-through holes (20), the outer peripheries of the first and second outer layers (14, 16) being substantially in registry with the outer periphery of the base layer (12),
**characterised in that** each pattern of flow-through holes (20) comprises a plurality of flow-through holes (20) located adjacent one another such that they define at least one line of weakness in the base layer (12).

12. The security laminate of claim 11 wherein each pattern of flow-through holes (20) defines a perforation line that is generally parallel to an edge of the outer periphery of the base layer (12).

13. The security laminate of claim 11 wherein the outer peripheries of the first and second outer layers (14, 16) are substantially in registry with one another and located outwardly adjacent the outer periphery of the base layer (12) in a direction parallel to the base layer (12), the inner faces of the first and second outer layers (14, 16) being additionally bonded to one another between the outer periphery of the base layer (12) and the outer peripheries of the outer layers.

## Patentansprüche

1. Sicherheitslaminat, umfassend:
eine Unterlageschicht (12) mit einer ersten Seite, einer zweiten Seite und einer Mehrzahl von Durchflussöffnungen (20), welche die Unterlageschicht (12) durchsetzen;
einen Kleber (18), der in den Durchflussöffnungen angeordnet ist und der die erste und zweite Seite der Unterlageschicht im Wesentlichen bedeckt; und
eine erste (14) und zweite (16) Außenschicht, wobei jede Außenschicht eine Innenseite und eine Außenseite aufweist, wobei die Innenseiten der ersten und zweiten Außenschicht mit der ersten bzw. zweiten Seite der Unterlageschicht und durch den Kleber innerhalb der Durchflussöffnungen (20) miteinander verbunden sind,
**dadurch gekennzeichnet, dass** die Mehrzahl von Durchflussöffnungen (20) benachbart zueinander angeordnet ist, so dass sie mindestens eine Schwächungslinie in der Unterlageschicht (12) festlegen.

2. Sicherheitslaminat nach Anspruch 1, bei dem die Unterlageschicht (12) aus einer Polyesterfolie hergestellt ist.

3. Sicherheitslaminat nach Anspruch 2, bei dem die Polyesterfolie Polyethylenterephthalat ist.

4. Sicherheitslaminat nach Anspruch 1, bei dem die Außenschichten (14, 16) aus Papier hergestellt sind.

5. Sicherheitslaminat nach Anspruch 1, weiter umfassend aufgedruckte Kennzeichnungsmerkmale auf der Außenseite von mindestens einer der Außenschichten.

6. Sicherheitslaminat nach Anspruch 5, bei dem das Laminat eine Banknote mit einem zuvor ausgewählten Nennwert bildet und die äußeren Oberflächen von beiden Außenschichten (14, 16) mit Kennzeichnungsmerkmalen bedruckt sind, die den Nennwert der Note angeben.

7. Sicherheitslaminat nach Anspruch 1, bei dem die Unterlageschicht (12) und die erste und zweite Außenschicht (14, 16) jeweils einen äußeren Umfangsrand aufweisen, wobei sich die äußeren Umfangsränder der ersten und zweiten Außenschicht im Wesentlichen miteinander decken und auswärts vom äußeren Umfangsrand der Unterlageschicht angeordnet sind, wobei die Innenseiten der ersten und zweiten Außenschicht zwischen dem äußeren Umfangsrand der Unterlageschicht und den äußeren Umfangsrändern der Außenschichten zusätzlich miteinander verbunden sind.

8. Verfahren zur Bildung eines Sicherheitslaminats, umfassend die Schritte:
Bereitstellen eines Klebers (18);
Bereitstellen einer ersten (14) und zweiten (16) Außenschicht, wobei jede Außenschicht eine Innenseite und eine Außenseite aufweist;
Bereitstellen einer Unterlageschicht (12) mit einer ersten und zweiten Seite;
Bilden einer Mehrzahl von Durchflussöffnungen (20) in der Unterlageschicht (12);
Verbinden der Innenseite der ersten Außenschicht (14) mit der ersten Seite der Unterlageschicht (12); und
Verbinden der Innenseite der zweiten Außenschicht (16) mit der zweiten Seite der Unterlageschicht (12) sowie an den Durchflussöffnungen (12) mit der Innenseite der ersten Außenschicht (14) mittels des Klebers (18),
**dadurch gekennzeichnet, dass** der Schritt eines Bildens einer Mehrzahl von Durchflussöffnungen (20) das Bilden einer Mehrzahl von Durchflussöffnungen (20) umfasst, die benachbart voneinander angeordnet sind, so dass sie mindestens eine Schwächungslinie in der Unterlageschicht festlegen.

9. Verfahren nach Anspruch 8, bei dem die Durchflussöffnungen (20) gebildet werden, nachdem die erste Außenschicht (14) mit der ersten Seite der Unterlageschicht (12) verbunden worden ist.

10. Verfahren nach Anspruch 9, bei dem die Durchflussöffnungen (20) von mindestens einem Laserbohrer gebildet werden.

11. Sicherheitslaminat, umfassend
eine Unterlageschicht (12) mit einer ersten Seite, einer zweiten Seite, einem allgemein rechteckigen äußeren Umfangsrand und einer Mehrzahl von Durchflussöffnungen (20), welche die Unterlageschicht durchsetzen, wobei die Durchflussöffnungen (20) in einer Mehrzahl von zuvor ausgewählten Mustern angeordnet sind;
einen Kleber (18), der in den Durchflussöffnungen (20) angeordnet ist und die erste und zweite Seite der Unterlageschicht (12) mit einer im Wesentlichen gleichförmigen Dicke überzieht; und
eine erste (14) und zweite (16) Außenschicht, wobei jede Außenschicht eine Innenseite, eine Außenseite und einen allgemein rechteckigen äußeren Umfangsrand aufweist, wobei die Innenseiten der ersten und zweiten Außenschicht (14, 16) durch den Kleber (18) mit der ersten bzw. zweiten Seite der Unterlageschicht (12) und an den Durchflussöffnungen (20) miteinander verbunden sind, wobei sich die äußeren Umfangsränder der ersten und zweiten Außenschicht (14, 16) im Wesentlichen mit dem äußeren Umfangsrand der Unterlageschicht (12) decken,
**dadurch gekennzeichnet, dass** jedes Muster von Durchflussöffnungen (20) eine Mehrzahl von Durchflussöffnungen (20) umfasst, die benachbart voneinander angeordnet sind, so dass sie mindestens eine Schwächungslinie in der Unterlageschicht (12) festlegen.

12. Sicherheitslaminat nach Anspruch 11, bei dem jedes Muster von Durchflussöffnungen (20) eine Perforationslinie festlegt, die allgemein parallel zu einer Kante des äußeren Umfangsrandes der Unterlageschicht (12) ist.

13. Sicherheitslaminat nach Anspruch 11, bei dem sich die äußeren Umfangsränder der ersten und zweiten Außenschicht (14, 16) im Wesentlichen miteinander decken und in einer zur Unterlageschicht (12) parallelen Richtung auswärts benachbart vom äußeren Umfangsrand der Unterlageschicht (12) angeordnet sind, wobei die Innenseiten der ersten und zweiten Außenschicht (14, 16) zwischen dem äußeren Umfangsrand der Unterlageschicht und den äußeren Umfangsrändern der Außenschichten zusätzlich miteinander verbunden sind.

## Revendications

1. Stratifié de sécurité comprenant :
une couche de base (12) ayant une première face, une seconde face et une pluralité d'orifices d'écoulement (20) pénétrant à travers la couche de base (12) ;
un adhésif (18) situé dans les orifices d'écoulement et recouvrant sensiblement les première et seconde faces de la couche de base ; et
des première (14) et seconde (16) couches externes, chaque couche externe ayant une face interne et une face externe, les faces internes des première et seconde couches externes collées respectivement aux premier et second côtés de la couche de base et l'une à l'autre par l'adhésif dans les orifices d'écoulement (20) ,
**caractérisé en ce que** plusieurs orifices d'écoulement (20) sont positionnés de manière adjacente entre eux afin de définir au moins une ligne de faiblesse dans la couche de base (12).

2. Stratifié de sécurité selon la revendication 1, dans lequel la couche de base (12) est réalisée à partir d'un film polyester.

3. Stratifié de sécurité selon la revendication 2, dans lequel le fil polyester est du polyéthylène téraphtalate.

4. Stratifié de sécurité selon la revendication 1 dans lequel les couches externes (14, 16) sont réalisées en papier.

5. Stratifié de sécurité selon la revendication 1 comprenant en outre des indices imprimés sur la face externe au moins d'une des couches externes.

6. Stratifié de sécurité selon la revendication 5 dans lequel le stratifié forme un billet de banque d'une valeur présélectionnée et les surfaces externes des deux couches (14, 16) sont imprimées avec des indices qui désignent la valeur du billet.

7. Stratifié de sécurité selon la revendication 1, dans lequel la couche de base (12) et les première et second couches externes (14, 16) ont chacune une périphérie externe, les périphéries externes des première et second couches externes étant sensiblement en registre entre elles et situées vers l'extérieur à partir de la périphérie externe de la couche de base, les faces internes des première et seconde couches externes étant en outre collées entre elles entre la périphérie externe de la couche de base et les périphéries externes des couches externes.

8. Procédé de formation d'un stratifié de sécurité comprenant les étapes consistant à :
prévoir un adhésif (18) ;
prévoir des première (14) et seconde (16) couches externes, chaque couche externe ayant une face interne et une face externe ;
prévoir une couche de base (12) ayant des première et seconde faces ;
former plusieurs orifices d'écoulement (20) dans la couche de base (12) ;
coller la face interne de la première couche externe (14) à la première face de la couche de base (12) ; et
coller avec l'adhésif (18) la face interne de la seconde couche externe (16) à la seconde face de la couche de base (12) et à la face interne de la première couche externe (14) au niveau des orifices d'écoulement (20) ,
**caractérisé en ce que** l'étape consistant à former plusieurs orifices d'écoulement (20) comprend la formation de plusieurs orifices d'écoulement (20) situés de manière adjacente entre eux afin de définir au moins une ligne de faiblesse dans la couche de base.

9. Procédé selon la revendication 8, dans lequel les orifices d'écoulement (20) sont formés après que la première couche externe (14) ait été collée à la première face de la couche de base (12).

10. Procédé selon la revendication 9, dans lequel les orifices d'écoulement (20) sont formés au moins par une perforatrice laser.

11. Stratifié de sécurité comprenant :
une couche de base (12) ayant une première face, une seconde face, une périphérie externe généralement rectangulaire et plusieurs orifices d'écoulement (20) pénétrant à travers la couche de base, les orifices d'écoulement (20) agencés dans une pluralité de modèles présélectionnés ;
un adhésif (18) situé dans les orifices d'écoulement (20) et recouvrant sensiblement les première et seconde faces de la couche de base (12) avec une épaisseur sensiblement uniforme de celle-ci ; et
des première (14) et seconde (16) couches externes, chaque couche externe ayant une face interne, une face externe et une périphérie externe généralement rectangulaire, les faces internes des première et seconde couches externes (14, 16) collées par l'adhésif (18), respectivement aux premier et second côtés de la couche de base (12) et l'une à l'autre au niveau des orifices d'écoulement (20), les périphéries externes des première et seconde couches externes (14, 16) étant sensiblement en registre avec la périphérie externe de la couche de base (12),
**caractérisé en ce que** chaque modèle d'orifices d'écoulement (20) comprend plusieurs orifices d'écoulement (20) situés de manière adjacente entre eux afin de définir au moins une ligne de faiblesse dans la couche de base (12).

12. Stratifié de sécurité selon la revendication 11, dans lequel chaque modèle d'orifices d'écoulement (20) définit une ligne de perforation qui est généralement parallèle à un bord de la périphérie externe de la couche de base (12).

13. Stratifié de sécurité selon la revendication 11, dans lequel les périphéries externes des première et seconde couches externes (14, 16) sont sensiblement en registre entre elles et situées vers l'extérieur de manière adjacente à la périphérie externe de la couche de base (12) dans une direction parallèle à la couche de base (12), les faces internes des première et seconde couches externes (14, 16) étant en outre collées entre elles entre la périphérie externe de la couche de base (12) et les périphéries externes des couches externes.
